# EUROPEAN PATENT SPECIFICATION

(11) **EP 0 559 575 B1**
(45) Date of publication and mention of the grant of the patent: **28.05.1997**
(21) Application number: 93400583.6
(22) Date of filing: 05.03.1993
(51) Int. Cl.: C08G 77/20, C08L 83/04, C09D 183/04, C09J 7/02

(54) **Organosilicone compositions**
Organosiliconzusammensetzungen
Compositions d'organosilicones

(30) Priority: 06.03.1992 US 846821
(43) Date of publication of application: 08.09.1993
(73) Proprietor: MINNESOTA MINING AND MANUFACTURING COMPANY, St. Paul, Minnesota 55133-3427 (US)
(72) Inventor: Boardman, Larry D., c/o Minnesota Mining Man.Co., St.Paul, Minnesota 55133-3427 (US); Melancon, Kurt C., c/o Minnesota Mining Man.Co., St.Paul, Minnesota 55133-3427 (US); Pham, Phat T., c/o Minnesota Mining Man.Co., St.Paul, Minnesota 55133-3427 (US)
(74) Representative: Warcoin, Jacques

(56) References cited:
- EP-A- 0 400 614
- EP-A- 0 464 706
- FR-A- 2 203 842
- FR-A- 2 400 052

## Description

### Background of the Invention

### 1. Field of the Invention

This invention relates to a silicone composition for preparing release layers and to substrates bearing a layer of the composition. More specifically, this invention relates to a solvent-free silicone composition, curable by a hydrosilation reaction, that contains a silicone component that imparts to release coatings made from the composition the combination of improved curing speed, improved release, and improved anchorage to substrates.

### 2. Discussion of the Art

Silicone compositions have been used to render adhesive materials nonadherent to substrates. Such silicone compositions generally comprise a mixture of an ethylenically-unsaturated organopolysiloxane, an organohydrogenpolysiloxane, and a catalyst for the curing of the mixture by means of a hydrosilation reaction. Many of these silicone compositions cannot be used when backings bearing them cannot withstand the heat required to cure the silicone composition or when the silicone composition cannot be adequately anchored to the backing.

U.S. Patent No. 4,609,574 discloses a curable silicone coating composition that cures more rapidly at elevated temperatures or cures less rapidly at lower temperatures. This composition comprises (A) a polydiorganosiloxane wherein 90 to 99.5% of all organic groups are methyl and from 0.5 to 10% of all organic groups are selected from vinyl and higher alkenyl groups represented by the formula -R(CH₂)ₘCH=CH₂ wherein R represents (CH₂)ₙ or (CH₂)ₚCH=CH- and m represents the integer 1, 2, or 3; n represents the integer 3 or 6; and p represents the integer 3, 4, or 5, with the proviso that at least 50 mole percent of the unsaturated groups are higher alkenyl groups; (B) an effective amount of a metal hydrosilation catalyst; (C) a methylhydrogenpolysiloxane crosslinking agent compatible with (A) and having an average of at least three silicon-bonded hydrogen atoms per molecule; and (D) an effective amount of an inhibitor for the metal hydrosilation catalyst; and wherein the composition contains 0.8 to 1.5 silicon-bonded hydrogen atoms for every unsaturated group in the composition. There is also disclosed that the polydiorganosiloxane can contain trace amounts of non-linear siloxane units, i.e., SiO₂ and RSiO_{3/2}.

U.S. Patent No. 4,726,964 discloses that, in pressure-sensitive adhesive tapes temporarily protected from inadvertent sticking by applying and bonding a release paper thereto, a small portion of the organopolysiloxane in the release coating of the release paper may be sometimes transferred to the sticking adhesive surface to cause decrease in the stickiness of the adhesive. It is further disclosed that this problem of transfer can be solved for silicone release compositions that are curable by hydrosilation by using non-linear organohydrogenpolysiloxanes represented by the general empirical formula:

(RSiO_{3/2})ₘ(R₂HSiO_{1/2})ₙ

in which each R represents, independently from the others, a substituted or unsubstituted monovalent hydrocarbon group free from aliphatic unsaturation, and m and n each represent a positive integer, with the proviso that the ratio of n/m is larger than 0.1 but smaller than 3. The non-linear organohydrogenpolysiloxanes are used in such an amount that from 0.5 to 5 moles of the hydrogen atoms directly bonded to the silicon atoms are provided per mole of the aliphatically unsaturated hydrocarbon groups in the silicone composition.

U.S. Patent No. 4,611,042 discloses a resinous copolymeric component that can be used in silicone compositions to provide an intermediate level of release. This component is a xylene-soluble copolymer consisting essentially of trimethylsiloxy units, alkenyldimethylsiloxy units, and SiO₂ units, the mole ratio of alkenyldimethylsiloxy units to trimethylsiloxy units being from 0.02:1 to 0.5:1 and the mole ratio of the sum of trimethylsiloxy units and alkenyldimethylsiloxy units to SiO₂ units being from 0.6:1 to 1.2:1.

Japanese Patent Application No. JP63-27560 (published: February 5, 1988) discloses a silicone composition for preparing a release coating comprising (1) an organopolysiloxane containing at least two groups in the molecule of the general formula:

R^{x}R^{y} ₂SiO_{1/2}(R^{z} ₂SiO_{2/2})ₘR^{w}SiO_{3/2}

wherein R^{x} represents an alkenyl group, such as vinyl, allyl, or propenyl; R^{y}, R^{z}, and R^{w} each independently represents hydrogen or an alkyl group of which at least 80% of R^{y} and R^{z} are methyl groups; and m represents an integer between 0 and 300; (2) a methylhydrogenpolysiloxane containing at least two hydrogen atoms bonded to silicon; and (3) platinum or a platinum compound as a catalyst.

While silicone compositions that provide coatings having low release and fast curing characteristics are known, and silicone compositions containing non-linear silicone components that provide coatings that do not exhibit transfer of a portion of organopolysiloxane from the release layer to an adhesive layer are known, silicone compositions that provide release coatings having improved anchorage to substrates without reducing the curing speed or release characteristics of the coating are still unavailable.

### Summary of the Invention

This invention provides silicone compositions, curable by a hydrosilation reaction, that contain an ethylenically-unsaturated silicone component having T-units (i.e., RSiO_{3/2} units) such as claimed in claims 1 to 7. The T-units comprise from about 25 to about 90 mole percent of the siloxane units in the ethylenically-unsaturated silicone component. These compositions provide improved anchorage to substrates without appreciably reducing the curing speed or the release characteristics of the coating.

The compositions comprise the following ingredients:
(a) an organopolysiloxane having at least two ethylenically-unsaturated hydrocarbon groups bonded to the silicon atoms;
(b) an organohydrogenpolysiloxane crosslinking agent;
(c) an effective amount of a hydrosilation catalyst; and
(d) from about 1% to about 75% by weight of a silicone component containing a plurality of ethylenically-unsaturated groups, said groups having from 4 to 12 carbon atoms, wherein in said silicone component, T-units comprise from 25 to 90 mole percent of the total number of siloxane units in said silicone component.
The polymer of component (d) of the foregoing composition is also believed to be novel.

The polymer of component (d) has the general empirical formula:

[H₂C=CH(CH₂)ₐR¹ ₂SiO_{1/2}]_{b}(R¹SiO_{3/2})_{c}(R¹ ₂SiO_{2/2})_{d} I

wherein
each R¹ independently represents a substituted or unsubstituted monovalent hydrocarbyl group, preferably selected from aliphatic groups having 1 to 18 carbon atoms, aromatic hydrocarbon groups, and halogenated derivatives thereof;
a represents an integer having a value of 2 to 10;
b represents the mole percent of b in (b+c+d) and has a value of from 10 to 75 mole percent;
c represents the mole percent of c in (b+c+d) and has a value of from 25 to 90 mole percent; and
d represents the mole percent of d in (b+c+d) and has a value of from 0 to 5 mole percent.

The ratio of b:c preferably ranges from 3:1 to 1:10, and the value of d is preferably less than about 5% of the value of (b+c). R' is preferably the methyl group.

The ratio of the number of silicon-bonded hydrogen atoms in the organohydrogenpolysiloxane of component (b) to the total number of silicon-bonded H₂C=CH(CH₂)ₐ groups in components (a) and (d) ranges from 0.5:1.0 to 5.0:1.0 or more, preferably from 0.8:1.0 to 2.0:1.0. From 1 to 75% by weight of the composition is the organopolysiloxane having T-units. Preferably, from 5 to 75%, more preferably from 5 to 50%, and most preferably from 5 to 20%, by weight of the composition is the organopolysiloxane having T-units.

### Detailed Description of the Invention

The compositions of this invention comprise:
(a) an organopolysiloxane having at least two ethylenically-unsaturated hydrocarbon groups bonded to the silicon atoms;
(b) an organohydrogenpolysiloxane crosslinking agent;
(c) an effective amount of a hydrosilation catalyst; and
(d) from 1% to 75% by weight of a silicone component containing a plurality of ethylenically-unsaturated groups, said groups having from 4 to 12 carbon atoms, wherein in said silicone component, T-units comprise from 25 to 90 mole percent of the total number of siloxane units in said silicone component.
The composition may optionally contain an inhibitor of premature gelation of the mixture of components (a), (b), (c), and (d). It is to be understood that each of the components (a), (b), (c), and (d) described above may contain mixtures of two or more of the appropriate materials.

The polymer of component (d) has the general empirical formula

[H₂C-CH(CH₂)ₐR¹ ₂SiO_{1/2})_{b}(R¹SiO_{3/2})_{c}(R¹ ₂SiO_{2/2})_{d} I

wherein
each R¹ independently represents a substituted or unsubstituted monovalent hydrocarbyl group, preferably selected from aliphatic groups having 1 to 18 carbon atoms, aromatic hydrocarbon groups, and halogenated derivatives thereof;
a represents an integer having a value of 2 to 10;
b represents the mole percent of b in (b+c+d) and has a value of from 10 to 75 mole percent;
c represents the mole percent of c in (b+c+d) and has a value of from 25 to 90 mole percent; and
d represents the mole percent of d in (b+c+d) and has a value of from 0 to 5 mole percent.
Preferably, from 5 to 75%, more preferably from 5 to 50%, and most preferably from 5 to 20%, by weight of the composition is the organopolysiloxane having T-units.

The term "T-unit" is a convention used to designate the empirical unit, R¹SiO_{3/2}. A T-unit has the structural formula: 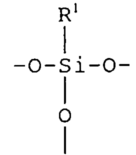 when present in silicone polymers resulting from polymerization by hydrolysis of hydrolyzable silyl compounds where some of the silyl compounds contain three hydrolyzable groups, i.e. silyl compounds having the formula R¹SiR²₃, in which R¹ is as defined above and each R² independently represents a hydrolyzable group, such as a halogen or an acetate group. Silicone polymers containing a small number of T-units are typically branched, but silicone polymers having a larger number of T-units will typically contain ring structures, may be highly crosslinked, or may even become intractable.

The term "D-unit" is a convention used to designate the empirical unit, R¹₂SiO_{2/2}. A D-unit has the structural formula: 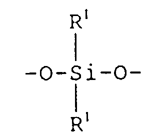 when present in silicone polymers resulting from the polymerization by hydrolysis of hydrolyzable silyl compounds where some of the silyl compounds contain two hydrolyzable groups, i.e., silyl compounds having the formula R¹₂SiR²₂, in which R¹ and R² are as defined above. Silicone polymers containing "D"-units are linear.

The term "M-unit" is a convention used to designate the empirical unit, R¹₃SiO_{1/2}. An M-unit has the structural formula: 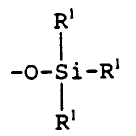 when present in silicone polymers resulting from the polymerization by hydrolysis of hydrolyzable silyl compounds where some of the silyl compounds contain one hydrolyzable group, i.e., silyl compounds having the formula R¹₃SiR², in which R¹ and R² are as defined above. Silyl compounds, R¹₃SiR², in hydrolyzable mixtures of silyl compounds, act as terminators of the polymer chain; the greater their concentration in the hydrolyzable composition, the lower the molecular weight of the silicone polymer that will be obtained by hydrolysis of the composition.

Ethylenically-unsaturated organopolysiloxanes containing T-units of Formula I suitable for use as component (d) of the composition of this invention include polymers having chain terminating M-units, H₂C=CH(CH₂)ₐR¹₂SiO_{1/2}, and ring-forming T-units, R¹SiO_{3/2}, wherein a and R¹ are as defined above.

The ethylenically-unsaturated organopolysiloxanes in the composition of the invention that contain T-units are copolymers having from 0.33 to 10 T-units for every one ethylenically-unsaturated M-unit and from about zero to about five mole percent of D-units. Analytical data suggests that the structure of the T-unit-containing components are cyclic in nature and comprise mixtures including materials having structures, such as, for example: 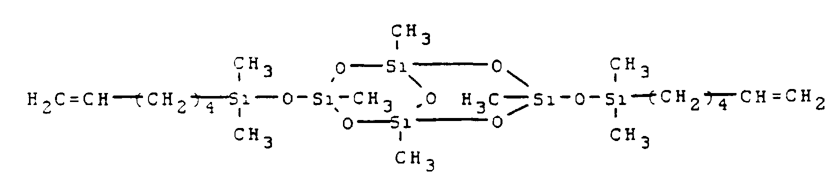 and

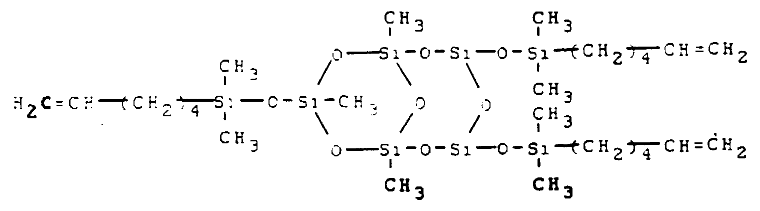

Ethylenically-unsaturated organopolysiloxanes containing T-units of Formula I can be prepared by several methods. For example, an organohydrogenpolysiloxane can be obtained by well known methods of cohydrolysis of b moles of HR¹₂SiR² and c moles of R¹SiR²₃, and d moles of R¹₂SiR²₂ to yield a copolymer having the empirical formula (HR¹₂SiO_{1/2})_{b}(R¹SiO_{3/2})_{c}(R¹₂SiO_{2/2})_{d}, wherein R¹, R², b, c, and d are as defined above. The organohydrogenpolysiloxane can be reacted with an α,ω-diene of the formula, H₂C=CH(CH₂)_{g}CH=CH₂, wherein g represents an integer having a value of 0 to 8 in a hydrosilation reaction in the presence of a catalyst to yield the ethylenically-unsaturated organopolysiloxanes containing T-units of Formula I.

Alternatively, the ethylenically-unsaturated organopolysiloxane containing T-units of Formula I can be prepared by an acid catalyzed cohydrolysis of a mixture of b moles of H₂C=CH(CH₂)ₐSiR¹₂R² and c moles of R¹SiR²₃ and d moles of R¹₂SiR_{2/2} wherein a, b, c, d, R¹, and R² are as defined above.

Ethylenically-unsaturated organopolysiloxanes suitable for use as component (a) of the composition of the invention preferably have the empirical Formula II:

R¹ ₑR³ _{f}SiO_{(4-e-f)/2} II

wherein each R¹ is bonded to a silicon atom and represents a member independently selected from the group consisting of substituted and unsubstituted monovalent hydrocarbyl groups, preferably selected from aliphatic groups having from 1 to 18 carbon atoms, aromatic hydrocarbon groups, and halogenated derivatives thereof, each R³ is bonded to a silicon atom and represents an ethylenically-unsaturated monovalent aliphatic hydrocarbon group having from 2 to 12 carbon atoms, e represents a number from 0 to 2.995, preferably from 0.5 to 2, f represents a number from 0.005 to 2.0, and the sum of e and f is equal to a number from 0.8 to 3.

Examples of ethylenically-unsaturated organopolysiloxanes suitable for this invention (i.e. Formula II, above) include normally fluid materials which preferably, but not necessarily, are free of silanic hydrogen, i.e., a hydrogen atom bonded to a silicon atom. Among the groups that R¹ can represent in Formula II include alkyl, such as, for example, methyl, ethyl, propyl, isopropyl, butyl, octyl, and dodecyl; cycloalkyl, such as cyclopentyl, cyclohexyl, and cycloheptyl; aryl, such as phenyl, naphthyl, tolyl, and xylyl; aralkyl, such as benzyl, phenylethyl, and phenylpropyl; halogenated derivatives of the aforementioned groups, such as chloromethyl, trifluoromethyl, 3,3,3-trifluoropropyl, chloropropyl, chlorophenyl, dibromophenyl, tetrachlorophenyl, and difluorophenyl; and cyanoalkyl, such as 3-cyanopropyl. The group R¹ preferably represents methyl. Formula II further includes those substances wherein R¹ is a combination of the aforementioned groups. The group R³ exhibits unsaturation by means of a double bond between two carbon atoms. Among the groups represented by R³ in Formula II are alkenyl groups, such as, for example, vinyl, allyl, methallyl, butenyl, pentenyl, and hexenyl.

Ethylenically-unsaturated organopolysiloxanes encompassed by Formula II are known in the art, and are described, for example, in U.S. Patent Nos. 3,882,083; 3,344,111; 3,436,366, and 4,609,574. Methods of their preparation and sources of commercial availability are also known.

Ethylenically-unsaturated organopolysiloxanes encompassed by Formula II can contain as few as two silicon atoms, such as 1,3-divinyltetramethyldisiloxane, 1,1,3-trivinyltrimethyldisiloxane, 1,1,3,3-tetravinyldimethyldisiloxane, or contain up to 10,000 silicon atoms per molecule. Preferred compounds of Formula II are alkenyldimethylsiloxy endblocked polydiorganosiloxane copolymers containing dimethylsiloxy and methylalkenylsiloxy units having a viscosity at 25°C of 50 to 20,000 mPa sec, preferably 200 to 5,000 mPa sec, wherein the alkenyl groups may be vinyl or higher alkenyl groups, such as the 5-hexenyl group. Other ethylenically-unsaturated organopolysiloxanes of Formula II include cyclic materials containing silicon-bonded vinyl or other unsaturated groups, such as the cyclic trimer, tetramer, or pentamer of methylvinylsiloxane, [(CH₂=CH)(CH₃)(SiO)]_{z}, or methylhexenylsiloxane, [(CH₂=CH(CH₂)₄(CH₃)(SiO)]_{z}, wherein z represents an integer from 3 to 10. Among these cyclic materials, tetramethyltetrahexenylcyclotetrasiloxane and tetramethyltetravinylcyclotetrasiloxane are preferred.

Organohydrogenpolysiloxane crosslinking agents suitable for use as component (b) of the composition of the invention preferably have the empirical Formula III:

R¹ ₑH_{f}SiO_{(4-e-f)/2} III

wherein R¹, e, and f are as defined above. R¹ preferably represents a methyl group. The organohydrogenpolysiloxane crosslinking agents represented by Formula III are normally fluid organopolysiloxanes and are preferably, but not necessarily, free of olefinic unsaturation, and they contain silanic hydrogen. Organohydrogenpolysiloxane compounds represented by Formula III are known in the art and are described, for example, in U.S. Patent Nos. 3,344,111 and 3,436,366.

Organohydrogenpolysiloxanes of Formula III include 1,3-dimethyldisiloxane, 1,1,3,3-tetramethyldisiloxane, as well as polymers containing up to 10,000 or more silicon atoms per molecule. Organohydrogenpolysiloxanes of Formula III also include cyclic materials, such as cyclic polymers of methyl hydrogen siloxane having the formula (CH₃SiHO_{2/2})_{z}, wherein z represents an integer from 3 to 10. Organohydrogenpolysiloxanes of Formula III may contain hydrogen siloxane units (HSiO_{3/2}), methyl hydrogen siloxane units (HSiCH₃O_{2/2}), dimethyl hydrogen siloxane units (HSi(CH₃)₂O_{1/2}), and dihydrogen siloxane units (H₂SiO_{2/2}).

The crosslinking agent of component (b) must have on average more than two Si-H groups per molecule to operate effectively as a crosslinking agent.

In general, the silicone compositions of this invention contain from 0.5 to 5.0 moles or more, preferably from 0.8 to 2.0 moles, of silicon-bonded hydrogen in the organohydrogenpolysiloxane crosslinking agent of component (b) for each mole of ethylenic unsaturation in the combination of ethylenically-unsaturated organopolysiloxanes of components (a) and (d).

The hydrosilation catalyst can be any compound that will catalyze the addition reaction of silicon-bonded hydrogen atoms with compounds containing olefinic double bonds. Examples of hydrosilation catalysts suitable for the composition of this invention include many of the late transition elements such as cobalt, rhodium, iridium, nickel, palladium, and platinum, and their organometallic complexes. Preferred catalysts are those containing the metal platinum, such as finely divided platinum metal, platinum metal on a finely divided carrier, such as charcoal or alumina, and compounds of platinum such as chloroplatinic acid, platinum olefin complexes, such as those described in U.S. Patent No. 3,159,601; platinum alkyne complexes, such as those described in U.S. Patent No. 4,603,215; the reaction product of chloroplatinic acid with a member selected from the class consisting of alcohols, ethers, aldehydes, and mixtures thereof, such as those described in U.S. Patent No. 3,220,972; and the reaction product of chloroplatinic acid with tetravinylcyclotetrasiloxanes in the presence of sodium bicarbonate in ethanol solution, such as those described in U.S. Patent No. 3,715,334. Particularly preferred catalysts are the complexes prepared with chloroplatinic acid and certain unsaturated organosilicon compounds, such as those described in U.S. Patent Nos. 3,419,593; 3,775,452; 4,288,345; and 4,421,903. One specific example of these catalysts is the reaction product of chloroplatinic acid and sym-divinyltetramethyldisiloxane . Another particularly preferred catalyst is a colloidal hydrosilation catalyst obtained by the reaction between a silicon hydride or a siloxane hydride and a platinum(0) or platinum(II) complex, such as those described in U.S. Patent No. 4,705,765. Still other particularly preferred catalysts are those that are activated by actinic radiation, such as the (η⁴-1,5-cyclooctadiene)diarylplatinum and the (η⁵-cyclopentadienyl)trialiphaticplatinum complexes described in U.S. Patent Nos. 4,530,879; 4,510,094; and 4,600,484.

The platinum catalyst should be present in an effective amount, i.e., an amount sufficient to catalyze the hydrosilation reaction. Satisfactory results may be obtained when the platinum catalyst is present in an amount sufficient to provide as little as one part by weight of platinum per million parts by weight of the total composition. On the other hand, an amount of the platinum catalyst sufficient to provide as high as 1 to 10 parts by weight of platinum per 1,000 parts by weight of the total composition may also be used. In general, however, it is preferred to employ the platinum catalyst in an amount sufficient to provide one to two hundred parts by weight of platinum per one million parts by weight of the total composition.

Depending on the hydrosilation catalyst employed, it may be desirable to include a hydrosilation inhibitor to extend the pot life of the formulation. Hydrosilation inhibitors are known and can be selected from compounds such as acetylenic alcohols, polyolefinic siloxanes, pyridine, acrylonitrile, organic phosphines and phosphites, unsaturated amides, and alkyl maleates.

Because the components of the composition of this invention are liquids, all of which preferably have a viscosity not in excess of 5,000 mPa sec at 25°C, the composition can be prepared simply by mixing an organopolysiloxane having at least two ethylenically-unsaturated hydrocarbon groups bonded to the silicon atoms; from 1% to 75% by weight of a silicone component containing a plurality of ethylenically-unsaturated groups, said groups having from 4 to 12 carbon atoms, wherein in said silicone component, T-units comprise from 25 to 90 mole percent of the total number of siloxane units in the silicone component; the organohydrogenpolysiloxane crosslinking agent; the inhibitor (when used); and the hydrosilation catalyst.

Various additives can be included in the curable compositions, depending on the intended purpose of the composition. Fillers, pigments, or both, such as chopped fibers, crushed polymers, talc, clay, titanium dioxide, and fumed silica can be added to the composition. Soluble dyes, oxidation inhibitors, or any material that does not interfere with the catalytic activity of the platinum complex under appropriate reaction conditions can be added to the composition.

The coating composition may further contain up to 99% by weight of a volatile thinning medium having a boiling point at normal atmospheric pressure of less than 150°C, such as a dispersant or solvent, to aid in mixing and using the composition. A volatile thinning medium is advantageously employed when a high viscosity, i.e. 1,000 mPa sec or greater, ethylenically-unsaturated organopolysiloxane is used, and reduction of the viscosity of the coating composition is desired. It is preferred, however, to prepare the coating compositions of this invention with polysiloxanes of appropriate viscosity so that the compositions can be coated by common methods, preferably, the compositions contain no more than 5% of a volatile thinning medium, more preferably no more than 10% of a volatile thinning medium.

The composition can be applied to a substrate by any suitable method, such as, for example, spraying, dipping, knife coating, curtain coating, roll coating, or the like. The substrate can be made of any solid material, such as, for example, a metal, e.g., aluminum or steel; a porous material, e.g., paper, wood, or fabric; an organic polymeric material, such as polyester, polyamide, polyolefin; or a siliceous material, e.g., concrete or glass. After the composition is applied, it can be cured under conditions that are appropriate for the hydrosilation catalyst employed, e.g., by heating or by exposure to actinic radiation, optionally followed by heating. For example, if the catalyst is the reaction product of chloroplatinic acid and symdivinyltetramethyldisiloxane, the composition can be cured slowly at room temperature or rapidly by heating. If the catalyst is an (η⁵-cyclopentadienyl)trialiphaticplatinum complex, such as (PhMe₂SiCp)PtMe₃ (wherein Ph represents a phenyl group, Me represents a methyl group, Cp represents a cyclopentadienyl group, and Pt represents a platinum atom), the composition can be cured by exposure to actinic radiation.

Also, if it is desired to modify the release character of the cured organosiloxane compositions of the invention, e.g., increase the adhesive release level from the surface of the cured organosilicone composition from a low value of less than about 0.1 N/dm width to a higher value of 0.4 to 6 N/dm width or more, release modifiers can be added to the composition. Release modifiers are known in the art and include materials such as the toluene soluble MQ resins described, for example, in U.S. Patent Nos. 3,527,659; 4,123,604; 4,611,042.

A layer of the cured organosiloxane composition of this invention can be used as a release layer for certain types of tapes, such as pressure-sensitive adhesive tapes and transfer tapes. Such tape articles typically comprise a substrate having first and second major surfaces. A layer of the cured composition is provided on at least one major surface of the substrate. A layer of pressure-sensitive adhesive is further provided on the substrate. The adhesive may be provided on the major surface opposite the major surface bearing the cured composite. Alternatively, the adhesive may be provided on the layer of cured release composition. In the case of transfer tapes, at least one major surface of the tape can be designed so that the adhesive release level of the at least one major surface differs from the adhesive release level of the other major surface, preferably by at least about 10%. Such a differential adhesive release level relationship is also applicable to articles having more than two major surfaces. A layer of the cured organosiloxane composition of this invention can be used as a low surface energy substrate or as a release coating in general.

Advantages of this invention are further illustrated by the following examples, where amounts are expressed in parts by weight. The particular materials and amounts recited as well as other conditions and details given should not be construed to unduly limit this invention.

As already noted, ethylenically-unsaturated organopolysiloxanes are well known in the art, and the ethylenically-unsaturated organopolysiloxanes used as component (a) of the compositions of this invention in the following examples, (CH₂=CH)(CH₃)₂SiO[Si(CH₃)₂O]₁₃₀Si(CH₃)₂(CH=CH₂) (hereinafter Polymer 1) and (5-hexenyl)(CH₃)₂SiO[Si(CH₃)(5-hexenyl)O]₃[Si(CH₃)₂O]₁₅₀Si(CH₃)₂(5-hexenyl) (hereinafter Polymer 2), were prepared by well known methods described, for example, in U.S. Patent Nos. 3,344,111; 3,436,366; 3,882,083; and 4,609,574. Furthermore, organohydrogenpolysiloxane crosslinking agents are well known, and the organohydrogenpolysiloxane crosslinking agents used as component (b) of the compositions of this invention in the following examples, namely (CH₃)₃SiO[Si(CH₃)HO]₃₅Si(CH₃)₃ hereinafter Crosslinking Agent 1) and (CH₃)₃SiO[Si(CH₃)HO]₂₅[Si(CH₃)₂O]₁₅Si(CH₃)₃ (hereinafter Crosslinking Agent 2), were prepared by well known methods described, for example, in U.S. Patent Nos. 3,344,111 and 3,436,366. The hydrosilation catalysts used as component (c) of the compositions of this invention in the following examples are also known in the art. The organoplatinum complex [Ph(CH₃)₂SiCp]Pt(CH₃)₃ (hereinafter Catalyst 1), in which "Ph" represents the phenyl group and "Cp" represents the η⁵-cyclopentadienyl group, was prepared using the methods described in U.S. Patent No. 4,510,094. A catalyst comprising the reaction product of chloroplatinic acid with 1,3-divinyl-1,1,3,3-tetramethyldisiloxane (hereinafter Catalyst 2) was prepared according to the methods described in U.S. Patent No. 4,288,345.

### Examples

The examples not relating to silicone copolymer with T units, and examples relating to copolymer 1, are comparative examples.

### Isolation of [(CH₂=CH)(CH₃)₂SiO_{1/2}]_{b}[(CH₃)SiO_{3/2}]_{c} (Copolymer 1)(comparative example)

Volatile materials were separated from a sample of an experimental high anchorage silicone release formulation identified as X-62-1110B (available from Shin-Etsu Ltd. of Tokoyo, Japan) (2273 g), by means of a thin-film evaporator at a temperature of 225°C at 0.1 mm. The distillate (695 g) was redistilled at 0.3 mm, and ¹H and ²⁹Si NMR analysis of the fraction collected at a temperature between 125°C and 160°C indicated a copolymer containing (CH₂=CH)(CH₃)₂SiO_{1/2} and (CH₃)SiO_{3/2} units in a ratio of 1:2.

### Preparation of [H (CH₃)₂SiO_{1/2}]_{b}[(CH₃)SiO_{3/2}]_{c} (Copolymer 2)

A 2-L 3-necked round bottom flask equipped for magnetic stirring and fitted with a thermometer and a 250-mL addition funnel was charged with water (105 g), 2-propanol (105 g), and concentrated (37%) hydrochloric acid (210 g). The addition funnel was charged with 1,1,3,3-tetramethyldisiloxane (50.0 g) and methyltrimethoxysilane (182.6 g), the flask and contents were cooled to a temperature of 0°C by means of an ice bath, and the mixture of silanes was added dropwise with vigorous stirring over the course of two hours. The reaction mixture was warmed to a temperature of approximately 10°C, 250 mL of toluene was added, and the resulting mixture was stirred for one hour at a temperature of 10°C to 20°C and for three hours at room temperature (23°C). The mixture separated into two phases. The aqueous phase was discarded. The clear organic phase was separated, washed once with saturated aqueous sodium bicarbonate, then washed twice with water, and then dried over magnesium sulfate. The resulting mixture was filtered, and the filtrate was stripped of volatile materials at a temperature of 30°C at 0.5 mm for three hours to provide a clear, colorless liquid (132.8 g, 98% yield). ¹H and ²⁹Si NMR analysis of the product indicated a copolymer containing H(CH₃) ₂SiO_{1/2} and (CH₃)SiO_{3/2} units in a ratio of 1:2.2.

### Preparation of [ (5-hexenyl) (CH₃)₂SiO_{1/2}]_{b}[(CH₃)SiO_{3/2}]_{c}(Copolymers 3a-3f)

An oven dried 1-L 3-necked round bottom flask equipped for magnetic stirring and fitted with a thermometer and a reflux condenser topped with an addition funnel was flushed with argon and charged with 1,5-hexadiene (183.3 g). The addition funnel was charged with the product of the preceding preparation, i.e., Copolymer 2, [H(CH₃)₂SiO_{1/2}]_{b}[ (CH₃)SiO_{3/2}]_{c} (b:c = 1:2.2, 130.0 g), and the flask and its contents were warmed to a temperature of 60°C. The silane copolymer was added dropwise with vigorous stirring. Concurrently, 20 mg of the reaction product of chloroplatinic acid with 1,3-divinyl-1,1,3,3-tetramethyldisiloxane (Catalyst 2), which had been diluted to 5 mL with heptane, was added with the aid of a syringe pump, at a rate of 1.0 mL/hour. Progress of the reaction was monitored by infrared spectroscopy by observing the disappearance of the silane band at 2,160 cm⁻¹. After three hours, it was determined that the reaction was complete; then the reaction mixture was cooled to room temperature, and acrylonitrile (approximately 5 mL) and clay ("ATTASORB-LVM", 5 g) were added to form a complex with the platinum catalyst. The mixture was stirred at room temperature for two hours, then filtered, and excess 1,5-hexadiene was separated under reduced pressure, yielding a clear, colorless liquid (172.5 g, 98% yield). ¹H and²⁹Si NMR analysis of the product indicated a copolymer containing (5-hexenyl)(CH₃)₂SiO_{1/2} and (CH₃)SiO_{3/2} units in a ratio of 1:2.2 (Copolymer 3c).

In an analogous fashion, copolymers containing (5-hexenyl)(CH₃)₂SiO_{1/2} and CH₃SiO_{3/2} units in ratios of 1:0.7 (Copolymer 3a), 1:1.2 (Copolymer 3b), 1:4 (Copolymer 3d), and 1:10 (Copolymer 3e) were prepared. Substitution of 1,9-decadiene for 1,5-hexadiene in the foregoing process provided a copolymer containing (9-decenyl) (CH₃)₂SiO_{1/2} and CH₃SiO_{3/2} units in ratio of 1:2.0 (Copolymer 3f).

### Example 1

This example illustrates the cure speed of solvent-free silicone compositions containing Copolymer 1 or Copolymer 3b.

Sufficient quantities of (CH₂=CH)(CH₃)₂SiO[Si(CH₃)₂O]₁₃₀Si(CH₃)₂(CH=CH₂) (Polymer 1, 4.91 g/meq C=C), (CH₃)₃SiO(Si(CH₃)HO]₃₅Si(CH₃)₃ (Crosslinking Agent 1, 0.064 g/meq Si-H), and one of either Copolymer 1 (0.189 g/meq C=C) or Copolymer 3b (0.160 g/meq C=C) were combined to provide formulations containing the copolymer and having the Si-H/C=C functionality ratio indicated in Table I. These compositions were labeled SFS (solvent-free silicone). Sufficient quantities of (5-hexenyl)(CH₃)₂SiO[Si(CH₃)(5-hexenyl)O]₃(Si(CH₃)₂O]₁₅₀ Si(CH₃)₂ (5-hexenyl) (Polymer 2, 2.52 g/meq C=C), (CH₃)₃SiO[Si(CH₃)HO]₂₅(Si(CH₃)₂O]₁₅Si(CH₃)₃ (Crosslinking Agent 2, 0.110 g/meq Si-H), and one of either Copolymer 1 or Copolymer 3b were similarly combined, and these compositions were labeled FCS (fast-cure silicone). Control formulations that did not contain either of Copolymer 1 or Copolymer 3b were also prepared. The amount of Copolymer 1 or Copolymer 3b, when present, was 20% by weight of the mixture.

These mixtures were catalyzed with 200 ppm of platinum as [Ph(CH₃)₂SiCp]Pt(CH₃)₃ (Catalyst 1), and the gel time of each mixture at room temperature upon irradiation with a "Black Light" ultraviolet source is set forth in Table I.

**Table I**

| Formulation | Copolymer additive | SiH/C=C | Gel time (sec) |
|---|---|---|---|
| SFS | -- | 1.0 | 37 |
| SFS | -- | 1.5 | 33 |
| SFS | 1 | 1.0 | 175 |
| SFS | 1 | 1.5 | 124 |
| SFS | 3b | 1.0 | 34 |
| SFS | 3b | 1.5 | 32 |
| FCS | -- | 1.0 | 11 |
| FCS | -- | 1.5 | 10 |
| FCS | 1 | 1.0 | 176 |
| FCS | 1 | 1.5 | 127 |
| FCS | 3b | 1.0 | 25 |
| FCS | 3b | 1.5 | 22 |

The data in Table I show that the vinyl functional copolymer (Copolymer 1) significantly reduced the speed of curing process in both formulations under the conditions examined. The use of the 5-hexenyl functional copolymer (Copolymer 3b) in the SFS formulations had no effect on the speed of curing, while the use of Copolymer 3b in the FCS formulations resulted in slightly reduced speed of curing.

### Example 2

This example illustrates the effects of adding Copolymer 1 or Copolymer 3c to FCS formulations followed by coating the resultant mixtures on polypropylene film and curing the coatings by exposure to ultraviolet radiation followed by heating.

By means of the method of Example 1, Polymer 2, Crosslinking Agent 2, and one of either Copolymer 1 or Copolymer 3c were combined to provide formulations containing the copolymer and having the Si-H/C=C functionality ratio set forth in Table II. The mixtures were catalyzed with 200 ppm of platinum in the form of Catalyst 1. For example, Polymer 2 (2.52 g/meq C=C, 5.00 g), Crosslinking Agent 2 (0.110 g/meq Si-H, 0.22 g), and Catalyst 1 (2.35 mg) were combined to give a FCS formulation having a Si-H/C=C functionality ratio of 1.0 containing neither Copolymer 1 nor Copolymer 3c. Also, Polymer 2 (2.52 g/meq C=C, 5.00 g), Crosslinking Agent 2 (0.110 g/meq Si-H, 0.58 g), Copolymer 1, (0.189 g/meq C=C, 0.62 g), and Catalyst 1 (2.80 mg) were combined to give a FCS formulation with a Si-H/C=C functionality ratio of 1.0 containing 10% by weight of Copolymer 1. Finally, Polymer 2 (2.52 g/meq C=C, 5.00 g), Crosslinking Agent 2 (0.096 g/meq Si-H, 0.39 g), Copolymer 3c, (0.295 g/meq C=C, 0.60 g), and Catalyst 1 (2.74 mg) were combined to give a FCS formulation with a Si-H/C=C functionality ratio of 1.0 and containing 10% by weight of Copolymer 3c. In each instance, the concentration of Copolymer 1 or Copolymer 3c, when present, was 10% based on the weight of the mixture.

The resultant compositions were knife coated onto biaxially oriented polypropylene film (50 micrometers in thickness) at a coating weight of 1 to 2 g/m² and cured by exposure to ultraviolet radiation (two passes at 30 m/min through a UV processor with two medium pressure mercury lamps emitting 120 watts of radiation per centimeter of lamp length to provide 300 mJ/cm² total dose) followed by exposure to heat in a circulating air oven at a temperature of 100°C for five minutes.

The release value of each of the cured silicone coatings were determined by the following procedure: A heptane-methyl ethyl ketone solution of pressure-sensitive adhesive comprising isooctyl acrylate (95.5% by weight)-acrylic acid (4.5% by weight) copolymer, as described in Example 5 of U.S. Patent No. Re. 24,906, incorporated herein by reference, was applied to the cured silicone coating and dried for five minutes at 70°C in a circulating air oven to give a dry coating weight of 32 g/m². A biaxially oriented film of polyethylene terephthalate (PET) (38 micrometers thick) was pressed against the surface of the adhesive coating to produce a laminate consisting of a pressure-sensitive adhesive tape and a silicone-coated substrate. The laminate was cut into 2.5 x 25 cm strips. The average values recorded in Table II per dm width were measured to be the forces required to pull the PET film with adhesive attached thereto (i.e., the pressure-sensitive adhesive tape) away from the silicone-coated substrate at an angle of 180° and a pulling speed of 230 cm/min.

The readhesion value of the pressure-sensitive tapes was determined by the following procedure: The pressure-sensitive tapes, as removed from the silicone coated surface, were applied to the surface of a clean glass plate. The average values recorded in Table II per dm width were measured to be the forces required to pull the tape from the glass surface at an angle of 180° and a pulling speed of 230 cm/min. A control readhesion value was obtained for the pressure-sensitive tape by applying the tape, which had not been placed in contact with a silicone-coated surface, to a clean glass plate and measuring the force required to remove the tape from the plate. The control readhesion value was 60 N/dm width.

Anchorage of the cured silicone coating to the polypropylene film was determined qualitatively from samples aged at room temperature at 100% relative humidity for six days by rubbing the coating with a finger. Anchorage is reported on the following scale: 1 = poor, 2 = fair, 3 = good, 4 = excellent.

**Table II**

| Copolymer additive | Si-H/C=C | Release (N/dm) | | Readhesion (N/dm) | | Anchorage |
|---|---|---|---|---|---|---|
| | | Initial | Aged | Initial | Aged | |
| -- | 1.0 | 0.42 | 0.50 | 58 | 60 | 1 |
| -- | 1.5 | 0.58 | 1.45 | 65 | 60 | 1 |
| -- | 2.0 | 0.73 | 1.80 | 65 | 60 | 1 |
| 1 | 1.0 | 0.89 | 0.81 | 63 | 65 | 4 |
| 1 | 1.5 | 0.81 | 1.10 | 67 | 72 | 4 |
| 1 | 2.0 | 1.10 | 1.60 | 68 | 65 | 4 |
| 3c | 1.0 | 0.42 | 0.42 | 68 | 65 | 4 |
| 3c | 1.5 | 0.77 | 0.73 | 63 | 66 | 4 |
| 3c | 2.0 | 0.97 | 0.97 | 62 | 65 | 4 |

The best results for the FCS system were obtained at a Si-H/C=C functionality ratio of 1.0. Under these conditions, levels of the vinyl functional Copolymer **1** sufficient to provide excellent anchorage to the polypropylene substrate resulted in some increase in release values. Use of the 5-hexenyl functional Copolymer **3c** at a Si-H/C=C ratio of 1.0, however, provided stable premium release (0.5 N/dm or lower), excellent readhesion, and excellent anchorage of the release coating to the substrate.

### Example 3

This example illustrates the effects of adding Copolymer 3c to FCS formulations followed by coating the resultant mixtures on polypropylene film and curing the coatings by heating.

Sufficient quantities of Polymer 2, Crosslinking Agent 2, and Copolymer 3c were combined according to the procedure of Example 2 to provide the formulations indicated in Table III. Each composition was formulated to provide a Si-H/C=C functionality ratio of 1.1. The mixtures were inhibited by means of 1.3% by weight of a mixture of diethyl fumarate (70% by weight) and benzyl alcohol (30% by weight) and catalyzed with 150 ppm platinum in the form of Catalyst 2. The resultant compositions were coated in the same manner as described in Example 2, cured by exposure to heat in a circulating air oven at a temperature of 100°C for two minutes, and tested in the same manner as described in Example 2.

**Table III**

| Amount of Copolymer 3c (% by weight) | Si-H/C=C | Release (N/dm) | | Readhesion (N/dm) | | Anchorage |
|---|---|---|---|---|---|---|
| | | Initial | Aged | Initial | Aged | |
| 0 | 1.1 | 0.31 | 0.58 | 62 | 56 | 1 |
| 5 | 1.1 | 0.39 | 0.50 | 65 | 63 | 3 |
| 10 | 1.1 | 0.42 | 0.54 | 58 | 60 | 4 |
| 15 | 1.1 | 0.54 | 0.81 | 63 | 65 | 4 |
| 20 | 1.1 | 0.58 | 1.25 | 67 | 66 | 4 |
| 50 | 1.1 | 0.97 | 1.15 | 55 | 65 | 4 |
| 75 | 1.1 | 1.20 | 1.95 | 60 | 62 | 4 |

The data in Table III show that useful levels of release and readhesion are obtained at levels of Copolymer 3c of up to at least 75% by weight in this particular silicone formulation. Good or better anchorage to the substrate is obtained at levels of Copolymer 3c down to at least as low as 5% by weight.

### Example 4

This example further illustrates the effects of adding Copolymer 3c to FCS formulations followed by coating the resultant mixtures on polypropylene and curing the coatings by heating.

Sufficient quantities of Polymer 2, Crosslinking Agent 2, and Copolymer 3c were combined according to the procedure of Example 2 to provide formulations containing 10% by weight of Copolymer 3c and the Si-H/C=C functionality ratios indicated in Table IV. The mixtures were inhibited by means of 1.3% by weight of a mixture of diethyl fumarate (70% by weight) and benzyl alcohol (30% by weight) and catalyzed with 150 ppm platinum in the form of Catalyst 2. The resultant compositions were coated in the same manner as described in Example 2, cured by exposure to heat in a circulating air oven at a temperature of 110°C for two minutes, and tested in the same manner as described in Example 2, except that in this example the dry coating weights of the adhesives were about 20 g/m².

**Table IV**

| Si-H/C=C | Release (N/dm) | | Readhesion (N/dm) | | Anchorage |
|---|---|---|---|---|---|
| | Initial | Aged | Initial | Aged | |
| 0.8 | 0.31 | 0.35 | 45 | 43 | 4 |
| 1.1 | 0.31 | 0.39 | 44 | 45 | 4 |
| 1.4 | 0.42 | 0.58 | 44 | 44 | 4 |
| 1.7 | 0.54 | 1.05 | 47 | 44 | 4 |
| 2.0 | 0.69 | 1.90 | 44 | 42 | 4 |

The data in Table IV show that for this particular silicone formulation, optimum release performance was observed at a Si-H/C=C functionality ratio of approximately 1. The Si-H/C=C functionality ratio does not, however, significantly affect the anchorage of the cured coating to the substrate.

### Example 5

This example illustrate the effects of adding Copolymers 3a, 3c, 3d, 3e, and 3f to FCS formulations followed by coating the resultant mixtures on polypropylene and curing the coatings by heating.

In essentially the same manner as described in Example 2, sufficient quantities of Polymer 2, Crosslinking Agent 2, and one of the copolymeric additives 3a, 3c, 3d, 3e, or 3f were combined to provide formulations containing 10% by weight of the additive and a Si-H/C=C functionality ratio of 1.1. The mixtures were inhibited with 1.3% by weight of a mixture diethyl fumarate (70% by weight) and benzyl alcohol (30% by weight) and catalyzed with 150 ppm platinum in the form of Catalyst 2. The resultant compositions were coated in the same manner as described in Example 2, cured by exposure to heat in a circulating air oven at a temperature of 100°C for two minutes, and tested in the same manner as described in Example 2.

**Table VII**

| Additive | M/T^{a} | Release (N/dm) | | Readhesion (N/dm) | | Anchorage |
|---|---|---|---|---|---|---|
| | | Initial | Aged | Initial | Aged | |
| 3a | 1:0.7 | 0.39 | 0.77 | 61 | 62 | 4 |
| 3c | 1:2.2 | 0.42 | 0.58 | 58 | 63 | 4 |
| 3d | 1:4 | 0.39 | 0.69 | 56 | 60 | 4 |
| 3e | 1:10 | 0.42 | 0.50 | 56 | 58 | 4 |
| 3f | 1:2.0 | 0.54 | 0.50 | 62 | 65 | 4 |

| | | | | | | |
|---|---|---|---|---|---|---|
| ^{a}M = (5-hexenyl)(CH₃)₂SiO_{1/2} or (9-decenyl)(CH₃)₂SiO_{1/2} T = (CH₃)SiO_{3/2} | | | | | | |

The results in Table V show that the ratio of (5-hexenyl)(CH₃)₂SiO_{1/2} to (CH₃)SiO_{3/2} units in the copolymeric additive can be varied from 1:0.7 to 1:10 and that alkenyl groups other than the 5-hexenyl group can be employed.

### Example 6

This example illustrates the effects of adding Copolymer 3c to SFS followed by coating the resultant mixture on polyethylene terephthalate, and curing the coating by exposure to UV radiation followed by heating.

A mixture of Polymer 1 (4.91 g/meq C=C, 5.0 g), Crosslinking Agent 1 (0.064 g/meq Si-H, 0.31 g), 3c (0.295 g/meq C=C, 0.59 g), and Catalyst 1 (2.7 mg) was prepared, providing a formulation containing 10% by weight of the copolymeric additive 3c and a Si-H/C=C functionality ratio of 1.0. The symbols Ph and Cp are the same as in Example 1. The resultant composition was coated in the same manner as described in Example 2 on biaxially oriented polyethylene terephthalate film having a thickness of 50 micrometers at a coating weight of 1 to 2 g/m² and cured by two passes at 30 m/min through a UV processor with two medium pressure mercury lamps emitting 120 watts of radiation per centimeter of lamp length (300 mJ/cm² total dose). The exposure to ultraviolet radiation was followed by heating in a circulating air oven at 100°C for 5 minutes. The cured coating was tested in the same manner as was described in Example 2 and was found to exhibit stable premium release and excellent anchorage to the film substrate.

## Claims

1. A composition, curable by means of a hydrosilation reaction, and capable of providing a release coating, comprising :
a) at least two different organopolysiloxanes, each having at least two ethylenically-unsaturated hydrocarbon groups bonded to silicon atoms ;
b) an organohydrogenpolysiloxane crosslinking agent ; and
c) an effective amount of a hydrosilation catalyst ;
provided that at least one of said at least two different organopolysiloxanes comprises from 1 to 75 % by weight of said composition and has the general formula :
[H₂C = CH(CH₂)ₐR¹ ₂SiO_{1/2}]_{b}(R¹SiO_{3/2})_{c}(R¹ ₂SiO_{2/2})_{d} (I)
wherein
each R¹ independently represents a substituted or unsubstituted monovalent hydrocarbyl group ;
a represents an integer having a value of 2 to 10 ;
b represents the mole percentage of b in (b+c+d) and has a value of from 10 to 75 mole percent ;
c represents the mole percentage of c in (b+c+d) and has a value of from 25 to 90 mole percent; and
d represents the mole percentage of d in (b+c+d) and has a value of from 0 to 5 mole percent
and at least one other of said at least two organopolysiloxanes is selected from the group consisting of alkenyl-dihydrocarbylsiloxy end blocked polydiorganosiloxane copolymers having from 2 to 10,000 silicon atoms and cyclic organopolysiloxanes.

2. The composition of claim 1 wherein the ratio of the number of silicon-bonded hydrogen atoms in the organohydrogenpolysiloxane crosslinking agent to the total number of silicon-bonded H₂C = CH(CH₂)ₐ groups ranges from 0.5:1.0 to 5.0:1.0.

3. The composition of anyone of claims 1 to 2 wherein component of formula (I) in claim 1 comprises from 5% to 75 % by weight of the composition.

4. The composition of claim 3, wherein said component of formula (1) comprises from 5% to 50 % by weight of the composition.

5. The composition of claim 4, wherein said component of formula (I) comprises from 5% to 20 % by weight of the composition.

6. The composition of anyone of claims 1 to 4 wherein said composition contains no more than 5% by weight volatile thinning medium, based on total weight of the composition.

7. The compositions of anyone of claims 1 to 6 wherein said composition contains up to 99 % by weight volatile thinning medium, based on total weight of the composition.

8. An article comprising a substrate having on at least one major surface thereof a layer of the cured composition anyone of claims 1 to 7.

9. An article comprising a substrate having on one major surface thereof a layer of the cured composition of anyone of claims 1 to 7 and on the other major surface thereof a layer of pressure-sensitive adhesive.

10. An article comprising a substrate formed of a layer of the cured composition of anyone of claims 1 to 7, said substrate having on one major surface thereof a layer of pressure-sensitive adhesive.

11. An article comprising at least two major surfaces and having on at least one major surface thereof a layer of the cured composition of anyone of claims 1 to 8 ; the adhesive release level of said at least one major surface differing from the adhesive release level of another major surface of said article.

## Patentansprüche

1. Zusammensetzung, die mittels einer Hydrosilylierungsreaktion härtbar ist und eine Trennbeschichtung zu bilden vermag, umfassend:
a) wenigstens zwei verschiedene Organopolysiloxane, die jeweils wenigstens zwei ethylenisch ungesättigte Kohlenwasserstoffgruppen aufweisen, die an Siliciumatome gebunden sind;
b) ein Organohydrogenpolysiloxan-vernetzungsmittel; sowie
c) eine wirksame Menge eines Hydrosilylierungskatalysators;
mit der Maßgabe, daß wenigstens eines der wenigstens zwei verschiedenen Organopolysiloxane 1 bis 75 Gew.-% der Zusammensetzung umfaßt und die allgemeine Formel
[H₂C=CH(CH₂)ₐR¹ ₂SiO_{1/2}]_{b}(R¹SiO_{3/2})_{c}(R¹ ₂SiO_{2/2})_{d} (1)
besitzt, wobei
jedes R¹ unabhängig eine substituierte oder unsubstituierte einwertige Hydrocarbylaruppe darstellt,
a eine ganze Zahl mit einem Wert von 2 bis 10 darstellt,
b den Molprozentanteil von b in (b+c+d) darstellt und einen Wert von 10 bis 75 Mol-% besitzt,
c den Molprozentanteil von c in (b+c+d) darstellt und einen Wert von 25 bis 90 Mol-% besitzt und
d den Molprozentanteil von d in (b+c+d) darstellt und einen Wert von 0 bis 5 Mol-% besitzt,
und wenigstens ein anderes der wenigstens zwei Organopolysiloxane aus der Gruppe ausgewählt ist, die aus Alkenyldihydrocarbylsiloxy-endblockierten Polydiorganosiloxan-Copolymeren mit 2 bis 10 000 Siliciumatomen und cyclischen Organopolysiloxanen besteht.

2. Zusammensetzung gemäß Anspruch 1, wobei das Verhältnis der Anzahl der an Silicium gebundenen Wasserstoffatome in dem Organohydrogenpolysiloxan-Vernetzungsmittel zur Gesamtzahl der an Silicium gebundenen H₂C=CH(CH₂)ₐ-Gruppen im Bereich von 0,5:1,0 bis 5,0:1,0 liegt.

3. Zusammensetzung gemäß einem der Ansprüche 1 bis 2, wobei die Komponente der Formel (1) in Anspruch 1 5 Gew.-% bis 75 Gew.-% der Zusammensetzung umfaßt.

4. Zusammensetzung gemäß Anspruch 3, wobei die Komponente der Formel (1) 5 Gew.-% bis 50 Gew.-% der Zusammensetzung umfaßt.

5. Zusammensetzung gemäß Anspruch 4, wobei die Komponente der Formel (1) 5 Gew.-% bis 20 Gew.-% der Zusammensetzung umfaßt.

6. Zusammensetzung gemäß einem der Ansprüche 1 bis 4, wobei die Zusammensetzung nicht mehr als 5 Gew.-% flüchtiges Verdünnungsmedium, bezogen auf das Gesamtgewicht der Zusammensetzung, enthält.

7. Zusammensetzung gemäß einem der Ansprüche 1 bis 6, wobei die Zusammensetzung bis zu 99 Gew.-% flüchtiges Verdünnungsmedium, bezogen auf das Gesamtgewicht der Zusammensetzung, enthält.

8. Gegenstand, der ein Substrat umfaßt, das auf wenigstens einer seiner Hauptflächen eine Schicht der gehärteten Zusammensetzung gemäß einem der Ansprüche 1 bis 7 aufweist.

9. Gegenstand, der ein Substrat umfaßt, das auf einer seiner Hauptflächen eine Schicht der gehärteten Zusammensetzung gemäß einem der Ansprüche 1 bis 7 und auf der anderen Hauptfläche eine Haftkleberschicht aufweist.

10. Gegenstand, der ein Substrat umfaßt, das aus einer Schicht der gehärteten Zusammensetzung gemäß einem der Ansprüche 1 bis 7 gebildet ist, wobei das Substrat auf einer seiner Hauptflächen eine Haftkleberschicht aufweist.

11. Gegenstand, der wenigstens zwei Hauptflächen umfaßt und auf wenigstens einer seiner Hauptflächen eine Schicht der gehärteten Zusammensetzung gemäß einem der Ansprüche 1 bis 8 aufweist, wobei sich die Klebetrennkraft der wenigstens einen Hauptfläche von der Klebetrennkraft einer anderen Hauptfläche des Gegenstands unterscheidet.

## Revendications

1. Composition, durcissable au moyen d'une réaction d'hydrosilation et capable de donner un revêtement antiadhérent, comprenant:
a) au moins deux organopolysiloxanes différents, comportant chacun au moins deux groupes hydrocarbonés à insaturation éthylénique différents reliés à des atomes de silicium;
b) un agent de réticulation organohydrogénopolysiloxane; et
c) une quantité efficace d'un catalyseur d'hydrosilation;
à condition qu'au moins un desdits au moins deux organopolysiloxanes différents constitue de 1 à 75% en poids de ladite composition et réponde à la formule générale:
[H₂C=CH(CH₂)ₐR¹ ₂SiO_{1/2}]_{b}(R¹SiO_{3/2})_{c}(R¹ ₂SiO_{2/2})_{d} (I)
dans laquelle:
chaque R¹ représente indépendamment un groupe hydrocarbyle monovalent, substitué ou non substitué;
a représente un nombre entier ayant une valeur de 2 à 10;
b représente le pourcentage molaire de b dans (b+c+d) et possède une valeur de 10 à 75% en moles;
c représente le pourcentage molaire de c dans (b+c+d) et possède une valeur de 25 à 90% en moles;
d représente le pourcentage molaire de d dans (b+c+d) et possède une valeur de 0 à 5% en moles;
et qu'au moins un autre desdits au moins deux organopolysiloxanes soit choisi dans le groupe constitué par les copolymères de polydiorganosiloxane bloqués aux extrémités par des groupes alcényldihydrocarbylsiloxy, comportant de 2 à 10 000 atomes de silicium, et les organopolysiloxanes cycliques.

2. Composition selon la revendication 1, dans laquelle le rapport du nombre d'atomes d'hydrogène liés à un silicium, dans l'agent de réticulation organohydrogénopolysilcxane, au nombre total de groupes H₂C=CH(CH₂)ₐ liés à un silicium s'échelonne de 0,5:1,0 à 5,0:1,0.

3. Composition selon l'une quelconque des revendications 1 à 2, dans laquelle le constituant de formule (1) dans la revendication 1 constitue de 5% à 75% en poids de la composition.

4. Composition selon la revendication 3, dans laquelle ledit constituant de formule (1) constitue de 5% à 50% en poids de la composition.

5. Composition selon la revendication 4, dans laquelle ledit constituant de formule (1) constitue de 5% à 20% en poids de la composition.

6. Composition selon l'une quelconque des revendications 1 à 4, dans laquelle ladite composition ne contient pas plus de 5% en poids de milieu diluant volatil, par rapport au poids total de la composition.

7. Composition selon l'une quelconque des revendications 1 à 6, dans laquelle ladite composition contient jusqu'à 99% en poids de milieu diluant volatil, par rapport au poids total de la composition.

8. Article comprenant un substrat sur au moins une surface principale duquel se trouve une couche de la composition durcie selon l'une quelconque des revendications 1 à 7.

9. Article comprenant un substrat sur une surface principale duquel se trouve une couche de la composition durcie selon l'une quelconque des revendications 1 à 7 et sur l'autre surface principale duquel se trouve une couche d'adhésif sensible à la pression.

10. Article comprenant un substrat formé d'une couche de la composition durcie selon l'une quelconque des revendications 1 à 7, ledit substrat portant, sur une de ses surfaces principales, une couche d'adhésif sensible à la pression.

11. Article comprenant au moins deux surfaces principales et dont au moins une des surfaces principales porte une couche de la composition durcie selon l'une quelconque des revendications 1 à 8, le taux d'antiadhérence de ladite au moins une surface principale différant du taux d'antiadhérence d'une autre surface principale dudit article.
